# EUROPEAN PATENT APPLICATION

(11) **EP 3 674 503 A1**
(43) Date of publication of application: **01.07.2020**
(21) Application number: 18848472.9
(22) Date of filing: 21.08.2018
(51) Int. Cl.: E05B 49/00, H04Q 9/00

(54) **ELECTRONIC LOCK CONTROL SYSTEM, KEY DEVICE, ELECTRONIC LOCK CONTROL DEVICE, AND ELECTRONIC LOCK SYSTEM**

(30) Priority: 22.08.2017 JP 2017159742
(71) Applicant: Panasonic Intellectual Property Management Co., Ltd., Osaka-shi, Osaka 540-6207 (JP)
(72) Inventor: HOSHIBA, Keitaro, Osaka-shi, Osaka 540-6207 (JP); UEDA, Shinsuke, Osaka-shi, Osaka 540-6207 (JP); KURITA, Masanori, Osaka-shi, Osaka 540-6207 (JP); NISHIO, Akihiko, Osaka-shi, Osaka 540-6207 (JP); KAWAKAMI, Yu, Osaka-shi, Osaka 540-6207 (JP)
(74) Representative: Appelt, Christian W.
(86) International application number: PCT/JP2018/030767
(87) International publication number: WO 2019/039453

(57) **Abstract**

Provided are an electric lock control system, a key device, an electric lock controller, and an electric lock system, all of which are configured to reduce the power consumption of the key device. An electric lock control system (1) includes a key device (20) and an electric lock controller (10). The key device (20) includes a key-end communications unit (22) to establish wireless communication. The electric lock controller (10) includes a lock-end communications unit (12) that communicates wirelessly with the key-end communications unit (22) and controls an electric lock (3). The key-end communications unit (22) includes a first key-end communications module (221) and a second key-end communications module (222). The first key-end communications module (221) performs continuous reception operation of continuously waiting for arrival of a beacon signal from the lock-end communications unit (12). The second key-end communications module (222) performs intermittent reception operation of intermittently waiting for arrival of a startup signal from the lock-end communications unit (12). The first key-end communications module (221) starts the continuous reception operation when the second key-end communications module (222) receives the startup signal.

## Description

### Technical Field

The present disclosure generally relates to an electric lock control system, a key device, an electric lock controller, and an electric lock system. More particularly, the present disclosure relates to an electric lock control system, key device, electric lock controller, and electric lock system, all of which are configured to control an electric lock for locking or unlocking an opening/closing member provided for a building.

### Background Art

An electronic locking system (electric lock system) for use in a multi-family dwelling house such as a condominium (which is called a "mansion" in Japan) is disclosed in, for example, Patent Literature 1.

The electronic locking system of Patent Literature 1 includes a door device, a management server, and a smartphone (key device). The door device includes a receiver for establishing short-range wireless communication with the smartphone. The receiver receives, from the smartphone, authentication information for authenticating the key device before accepting a command to lock or unlock the door device. When the authentication is done successfully based on the authentication information received by the receiver, the management server allows the door device to be unlocked.

The receiver further includes a beacon for emitting radio signals at predetermined intervals. The beacon emits a transmission signal, requesting the smartphone to transmit the authentication information, toward a predetermined region. On receiving the transmission signal, the smartphone transmits the authentication information.

Nevertheless, if the smartphone (key device) needs to continuously wait for the arrival of the transmission signal, then its power consumption increases.

### Citation List

### Patent Literature

Patent Literature 1: JP 2017-2633 A

### Summary of Invention

It is therefore an object of the present invention to provide an electric lock control system, a key device, an electric lock controller, and an electric lock system, all of which are configured to reduce the power consumption of the key device.

An electric lock control system according to an aspect of the present disclosure includes a key device and an electric lock controller. The key device includes a key-end communications unit to establish wireless communication. The electric lock controller includes a lock-end communications unit that communicates wirelessly with the key-end communications unit and controls an electric lock that locks or unlocks an opening/closing member installed at a building's opening. The key-end communications unit includes a first key-end communications module and a second key-end communications module. The first key-end communications module performs continuous reception operation of continuously waiting for arrival of a first signal from the lock-end communications unit. The second key-end communications module performs intermittent reception operation of intermittently waiting for arrival of a second signal from the lock-end communications unit. The first key-end communications module starts the continuous reception operation when the second key-end communications module receives the second signal.

A key device according to another aspect of the present disclosure may be used as the key device of the electric lock control system described above.

An electric lock controller according to still another aspect of the present disclosure may be used as the electric lock controller of the electric lock control system described above.

An electric lock system according to yet another aspect of the present disclosure includes: the electric lock control system described above; and an electric lock to be controlled by the electric lock controller.

### Brief Description of Drawings

FIG. 1 is a block diagram illustrating an electric lock control system and electric lock system according to an exemplary embodiment of the present disclosure;
FIG. 2 illustrates how the electric lock control system may be used;
FIG. 3 illustrates a sequence of signals exchanged in an exemplary operation performed by the electric lock control system; and
FIG. 4 illustrates an electric lock control system according to a first variation of the exemplary embodiment of the present disclosure.

### Description of Embodiments

### (1) Overview

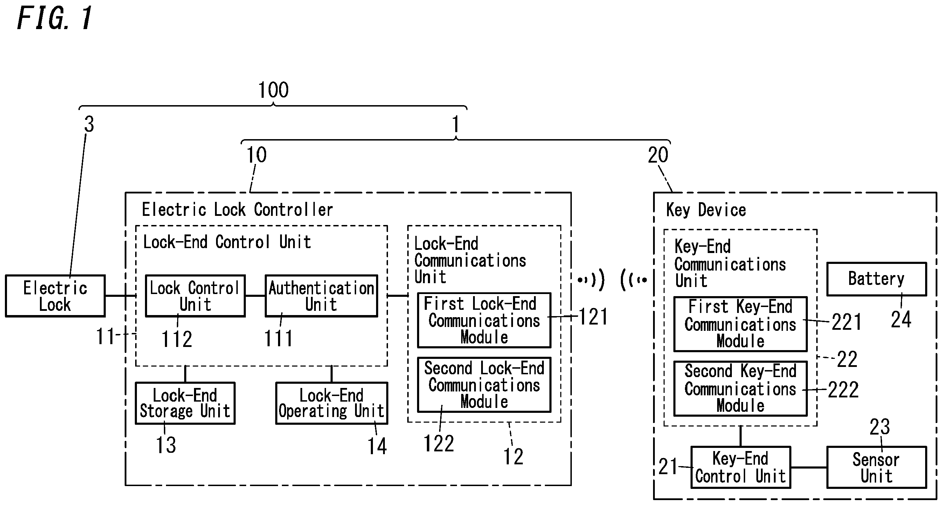

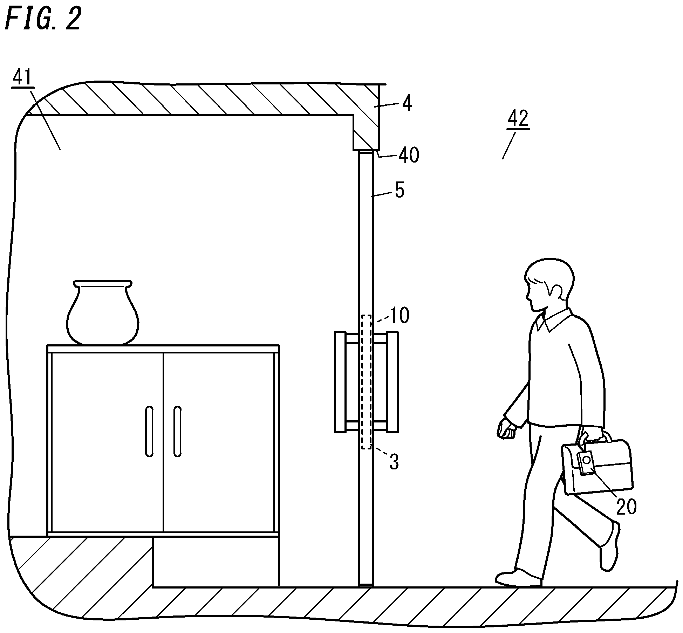

First of all, an overview of an electric lock control system 1 according to an exemplary embodiment will be described with reference to FIGS. 1 and 2.

An electric lock control system 1 according to this embodiment is a system for controlling an electric lock 3. The electric lock 3 is a device for locking or unlocking an opening/closing member 5 (see FIG. 2). The opening/closing member 5 is provided at an opening 40 of a building 4. As used herein, the "opening/closing member 5" refers to a door or a window separating the inside of the building 4 (hereinafter referred to as "the inside 41") from the outside of the building 4 (hereinafter referred to as "the outside 42") and may be a main entrance door, a back door (which may be either a hinged door or a sliding door), or a patio door, for example. In this embodiment, the building 4 is a single-family dwelling house, and the opening/closing member 5 is a main entrance door. The electric lock control system 1 includes an electric lock controller 10 and a key device 20. The electric lock controller 10 and the electric lock 3 are installed on the opening/closing member 5. The key device 20 is a mobile electronic terminal device which may be carried by a resident who is a user 6 with him or her. In this embodiment, the key device 20 is configured as a tag attachable to a bag or any other type of personal belonging carried by the user 6 with him or her. An electric lock system 100 according to this embodiment includes the electric lock control system 1 and the electric lock 3.

The electric lock controller 10 is configured to be able to communicate with the key device 20 and electrically switch the state of the electric lock 3 from a shut state (where the opening/closing member 5 is locked) into an opened state (where the opening/closing member 5 is unlocked), and vice versa, by communicating with the key device 20.

The key device 20 has the capability of communicating with the electric lock controller 10. In this embodiment, the method of communication between the electric lock controller 10 and the key device 20 is wireless communication via radio waves.

The basic function of the electric lock control system 1 is to allow the electric lock controller 10 to control the electric lock 3 toward the opened state by making the key device 20 transmit key information to the electric lock controller 10. As used herein, the "key information" is a key ID (identification) that is stored in advance in the key device 20. That is to say, successful authentication of the key device's 20 key information through communication between the electric lock controller 10 and the key device 20 makes the electric lock 3 opened.

Such unlocking operation is performed by the electric lock controller 10 when the user (resident) 6 who holds the key device 20 stays outdoors, or is in the outside 42 (i.e., when the user 6 is coming home) and/or when the user 6 stays indoors, or is in the inside 41 (i.e., when the user is going out). In this embodiment, the unlocking operation is performed by the electric lock controller 10 both when the user 6 is coming home and when the user 6 is going out. Specifically, when the user 6 is coming home, communication between the electric lock controller 10 and the key device 20 held by the user 6, who is still staying in the outside 42 but who has come close enough to the opening/closing member 5, makes the opening/closing member 5 ready to be unlocked. Likewise, when the user 6 is going out, communication between the electric lock controller 10 and the key device 20 held by the user 6, who is still staying in the inside 41 but who has come close enough to the opening/closing member 5, makes the opening/closing member 5 ready to be unlocked. In addition, although detailed description thereof is omitted in this embodiment, when authentication of the key information is done successfully through communication with the key device 20 while the opening/closing member 5 is unlocked, the electric lock controller 10 locks the opening/closing member 5. That is to say, the electric lock controller 10 is able to perform not only the unlocking operation but also the locking operation of turning the opening/closing member 5 from the unlocked state into the locked state by communicating with the key device 20.

### (2) Configuration

Next, configurations for the electric lock control system 1 and electric lock system 100 according to this embodiment will be described in detail.

### (2.1) Configuration for electric lock controller

The electric lock controller 10 includes a lock-end control unit 11, a lock-end communications unit 12, a lock-end storage unit 13, and a lock-end operating unit 14. The lock-end control unit 11 includes an authentication unit 111 and a lock control unit 112.

The electric lock controller 10 is provided for the opening/closing member 5 of the building 4. The electric lock controller 10 may operate either with the power supplied from an external power supply such as a grid power supply (utility power supply) or with the power supplied from a battery.

The lock-end control unit 11 is implemented as a microcomputer including a processor and a memory, for example. In other words, since the lock-end control unit 11 is configured as a computer system including a processor and a memory, the computer system functions as the lock-end control unit 11 by making the processor execute an appropriate program. The program may be stored in advance in the memory, or may also be downloaded via a telecommunications line such as the Internet or distributed after having been stored on a non-transitory storage medium such as a memory card. The lock-end control unit 11 controls the lock-end communications unit 12 and the electric lock 3.

The lock-end communications unit 12 is configured to communicate wirelessly with the key-end communications unit 22 of the key device 20 (to be described later). The lock-end communications unit 12 includes a first lock-end communications module 121 and a second lock-end communications module 122, which are compliant with two different communications protocols.

The first lock-end communications module 121 is configured to establish wireless communication compliant with the Bluetooth Low Energy (BLE) protocol. The BLE is the name of a set of low power specifications according to Bluetooth®, which is a wireless Personal Area Network (PAN) technology standard. The frequency band that the BLE uses is a 2.4 GHz band. The first lock-end communications module 121 communicates wirelessly with the first key-end communications module 221 of the key device 20 (to be described later) in accordance with the BLE communications protocol. The first lock-end communications module 121 transmits a beacon signal (first signal) to the key device 20. In addition, the first lock-end communications module 121 receives, from the key device 20, a response signal to the beacon signal. On receiving the response signal, the first lock-end communications module 121 carries out authentication communication with the first key-end communications module 221. During this authentication communication, key information is transmitted from the first key-end communications module 221 to the first lock-end communications module 121.

The second lock-end communications module 122 is compliant with a different communications protocol from the first lock-end communications module 121, and communicates wirelessly with the second key-end communications module 222 of the key device 20. That is to say, the second lock-end communications module 122 communicates wirelessly with the second key-end communications module 222 in compliance with a different communications protocol from the BLE protocol. In this embodiment, the frequency band of the signals that are used by the second lock-end communications module 122 to communicate wirelessly with the second key-end communications module 222 is a 2.4 GHz band. However, the frequency band of the signals that are used by the second lock-end communications module 122 for the wireless communication does not have to be the 2.4 GHz band but may be any other frequency band as well. The second lock-end communications module 122 transmits a startup signal (second signal) to the key device 20. This startup signal includes random data such as PN9 (pseudo-random noise) pattern. As used herein, the "PN9 pattern" refers to a bit string generated by a bit shifter of nine stages. Note that the data included in the startup signal does not have to be such random data but may also include predetermined data. Alternatively, the startup signal may include no data at all. The second lock-end communications module 122 is required to have at least transmission function but may also have reception function. That is to say, the second lock-end communications module 122 may handle bidirectional communications.

Note that the first lock-end communications module 121 and the second lock-end communications module 122 may share the same antenna for transmitting and receiving wireless signals but may also use two different antennas for these two purposes.

The lock-end control unit 11 controls the lock-end communications unit 12 (including the first lock-end communications module 121 and the second lock-end communications module 122). The lock-end control unit 11 makes the second lock-end communications module 122 transmit the startup signal and then makes the first lock-end communications module 121 transmit the beacon signal. This operation will be described in detail later in the "(3) Exemplary operation" section.

The lock-end storage unit 13 may be implemented as, for example, a nonvolatile memory such as an electrically erasable programmable read-only memory (EEPROM) or a flash memory. The lock-end storage unit 13 may store registration information which is a registration ID of the key device 20. The registration information corresponds one to one to the key information transmitted from the key device 20. Optionally, the lock-end storage unit 13 may be a memory of the lock-end control unit 11.

The lock-end operating unit 14 has the capability of accepting commands entered by the user 6. The lock-end operating unit 14 may include a press button switch, for example. The press button switch is provided for each of the inside 41 and outside 42 of the opening/closing member 5. On accepting the commands entered by the user 6, the lock-end operating unit 14 outputs command signals representing his or her commands to the lock-end control unit 11.

When the lock-end communications unit 12 (first lock-end communications module 121) receives a wireless signal containing key information from the key device 20, the authentication unit 111 collates the key information with the registration information stored in advance in the lock-end storage unit 13 to perform authentication processing on the key device 20. Specifically, if any piece of registration information matching the key information is found stored in the lock-end storage unit 13, then authentication of the key information by the authentication unit 111 is a success. On the other hand, if no piece of registration information matching the key information is found stored in the lock-end storage unit 13, then authentication of the key information by the authentication unit 111 is a failure.

When the authentication unit 111 successfully authenticates the key information, the lock control unit 112 controls the electric lock 3 to lock or unlock the opening/closing member 5. Specifically, the lock control unit 112 controls the electric lock 3 such that when the authentication unit 111 successfully authenticates the key information and the lock-end communications unit 12 receives a lock/unlock request signal from the key device 20, the electric lock 3 switches from the shut state to the opened state, or vice versa.

### (2.2) Configuration for key device

Next, a configuration for the key device 20 will be described.

The key device 20 includes a key-end control unit 21, a key-end communications unit 22, a sensor unit 23, and a battery 24. The key device 20 is a tag device that may be carried by the user 6 with him or her.

The battery 24 is implemented as either a primary battery or a secondary battery, and serves as an operating power source for the key device 20. The battery 24 may or may not be one of constituent elements of the key device 20.

The key-end control unit 21 is implemented as a microcomputer including a processor and a memory, for example. In other words, since the key-end control unit 21 is configured as a computer system including a processor and a memory, the computer system functions as the key-end control unit 21 by making the processor execute an appropriate program. The program may be stored in advance in the memory, or may also be downloaded via a telecommunications line such as the Internet or distributed after having been stored on a non-transitory storage medium such as a memory card. The key-end control unit 21 controls the key-end communications unit 22.

The key-end communications unit 22 is configured to communicate wirelessly with the lock-end communications unit 12 of the electric lock controller 10. The key-end communications unit 22 includes a first key-end communications module 221 and a second key-end communications module 222, which are compliant with two different communications protocols.

The first key-end communications module 221 is configured to establish wireless communication compliant with the Bluetooth Low Energy (BLE) protocol. That is to say, the first key-end communications module 221 and the first lock-end communications module 121 of the electric lock controller 10 are compliant with the same communications protocol. The first key-end communications module 221 receives the beacon signal transmitted from the first lock-end communications module 121. Also, on receiving the beacon signal, the first key-end communications module 221 transmits a response signal. In other words, the first key-end communications module 221 communicates bidirectionally with the first lock-end communications module 121 of the electric lock controller 10.

The second key-end communications module 222 is compliant with a different communications protocol from the first key-end communications module 221, and communicates wirelessly with the second lock-end communications module 122 of the electric lock controller 10. That is to say, the second key-end communications module 222 communicates wirelessly with the second lock-end communications module 122 in compliance with a communications protocol different from the BLE but the same as that of the second lock-end communications module 122. The second key-end communications module 222 receives the startup signal transmitted from the second lock-end communications module 122. The second key-end communications module 222 is required to have at least reception function but may also have transmission function. That is to say, the second key-end communications module 222 may handle bidirectional communications.

Note that the first key-end communications module 221 and the second key-end communications module 222 may share the same antenna for transmitting and receiving wireless signals but may also use two different antennas for these two purposes.

In this embodiment, the communications protocol of the wireless communication established between the first lock-end communications module 121 of the electric lock controller 10 and the first key-end communications module 221 of the key device 20 is the BLE protocol. The BLE protocol includes a set of communications protocol specifications that are defined in advance to establish wireless communications between various types of devices. That is to say, to establish wireless communication by the BLE, the communications protocol specifications of the BLE protocol need to be compliant with. The communications protocol specifications of the BLE protocol specify that the operation of waiting for arrival of a signal should be performed continuously for at least a predetermined amount of time. Thus, the first key-end communications module 221 is configured to perform continuous reception operation. As used herein, the "continuous reception operation" refers to the operation of continuously waiting for arrival of a wireless signal from a communications partner for at least a predetermined amount of time. In other words, the continuous reception operation is the operation of scanning the beacon signal coming from the first lock-end communications module 121. The first key-end communications module 221 may receive the beacon signal only while performing the continuous reception operation. Note that the first key-end communications module 221 also has a sleep mode as another mode of operation thereof. In the sleep mode, the first key-end communications module 221 does not perform the continuous reception operation.

The communications protocol of the wireless communication established between the second lock-end communications module 122 of the electric lock controller 10 and the second key-end communications module 222 of the key device 20 is different from the BLE protocol and is not restricted by the communications protocol specifications of the BLE protocol. In this embodiment, the second key-end communications module 222 is configured to perform intermittent reception operation. As used herein, the "intermittent reception operation" refers to the operation of intermittently waiting for arrival of a wireless signal from the communications partner. That is to say, the second key-end communications module 222 may receive the wireless signal (startup signal) only while waiting for the arrival of the signal during the intermittent reception operation.

The key-end control unit 21 controls the key-end communications unit 22, and makes the key-end communications unit 22 communicate with (the lock-end communications unit 12 of) the electric lock controller 10, thereby enabling the electric lock controller 10 to unlock the opening/closing member 5. Specifically, when the first key-end communications module 221 receives a beacon signal from the first lock-end communications module 121, the key-end control unit 21 makes the first key-end communications module 221 transmit a response signal to the first lock-end communications module 121. Then, when wireless communication is established between the first key-end communications module 221 and the first lock-end communications module 121, the key-end control unit 21 makes the first key-end communications module 221 and the first lock-end communications module 121 perform authentication communication. When the electric lock controller 10 successfully authenticates the key information included in the wireless signal that the first lock-end communications module 121 has received, the electric lock controller 10 controls the electric lock 3 upon a lock/unlock request to lock or unlock the opening/closing member 5.

Also, when determining that the second key-end communications module 222 should have received the startup signal from the second lock-end communications module 122, the key-end control unit 21 instructs the first key-end communications module 221 to start the continuous reception operation. This operation will be described in detail later in the "(3) Exemplary operation" section.

The sensor unit 23 is configured to detect a predetermined state. In this embodiment, the sensor unit 23 is implemented as an acceleration sensor and is configured to detect, as the predetermined state, that the key device 20 is moving. The sensor unit 23 is configured to measure the acceleration to the key device 20, and determines, when finding the acceleration measured greater than a threshold value, that the key device 20 should be moving. The result of detection by the sensor unit 23 is output to the key-end control unit 21. In response, based on the result of detection by the sensor unit 23, the key-end control unit 21 controls the key-end communications unit 22. Specifically, when the sensor unit 23 detects the predetermined state (i.e., that the key device 20 is now moving), the key-end control unit 21 makes the second key-end communications module 222 perform the intermittent reception operation for a certain period of time. In other words, unless the sensor unit 23 detects the predetermined state (i.e., if the key device 20 is left somewhere or if the user 6 who holds the key device 20 is now at a stop), the key-end control unit 21 makes the second key-end communications module 222 suspend the intermittent reception operation.

### (2.3) Configuration for electric lock

Next, a configuration for the electric lock 3 will be described.

The electric lock 3 is configured to lock or unlock the opening/closing member 5 (such as a main entrance door). The electric lock 3 includes a deadbolt, a driving unit, and a driver circuit. The driver circuit generates a drive signal in accordance with a control signal (which may be either an unlock signal or a lock signal) supplied from the lock control unit 112, and outputs the drive signal to the driving unit. The driving unit includes an electric motor and a transmission mechanism for transmitting the driving force of the electric motor to the deadbolt. The driving unit drives a drive motor in accordance with the drive signal supplied from the driver circuit. Transmitting the driving force of the drive motor to the deadbolt via the transmission mechanism causes the deadbolt to move to either a locked position or an unlocked position. In this case, when the deadbolt moves to the locked position, the deadbolt is at least partially inserted into a bolt hole cut in a door frame that supports the opening/closing member 5. In this state, the opening/closing member 5 is kept closed. That is to say, the opening/closing member 5 is locked. On the other hand, when the deadbolt moves to the unlocked position, the deadbolt is entirely out of the bolt hole. In this state, the opening/closing member 5 may be opened or closed. That is to say, the opening/closing member 5 is unlocked.

### (3) Exemplary operation

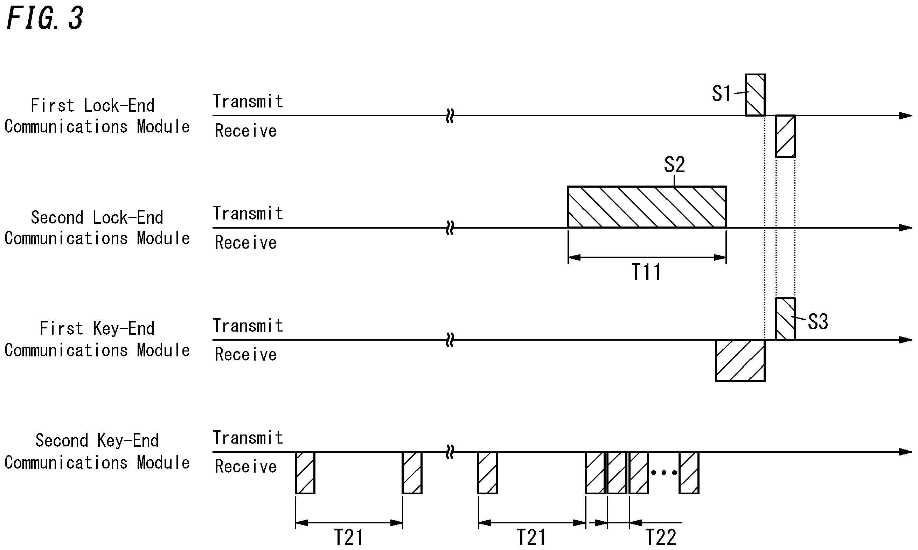

Next, an exemplary operation of the electric lock control system 1 will be described with reference to FIG. 3. In the following example, it will be described how the electric lock control system 1 may operate when the user 6 who holds the key device 20 is coming home. Note that in FIG. 3, the beacon signal transmitted by the first lock-end communications module 121 is designated by S1, the startup signal transmitted by the second lock-end communications module 122 is designated by S2, and the response signal transmitted by the first key-end communications module 221 is designated by S3.

As the user 6 who stays outdoors (i.e., in the outside 42) walks closer toward the opening/closing member 5, the result of measurement (acceleration) by the sensor unit 23 (acceleration sensor) will soon exceed a threshold value. When that happens, the key-end control unit 21 makes the second key-end communications module 222 perform the intermittent reception operation to wait for arrival of the startup signal S2 transmitted from the second lock-end communications module 122. Unless the second key-end communications module 222 receives the startup signal S2, the key-end control unit 21 sets the reception interval of the intermittent reception operation at T21. The reception interval T21 may be 250 ms, for example. However, 250 ms is only an exemplary reception interval T21 and should not be construed as limiting.

When the user 6 presses a press button switch of the lock-end operating unit 14, the lock-end control unit 11 makes the second lock-end communications module 122 transmit the startup signal S2. The startup signal S2 is a continuous signal and is transmitted continuously for a certain period of time. The signal length (or duration) T11 of the startup signal S2 is longer than the reception interval T21 of the intermittent reception operation by the second key-end communications module 222. As used herein, the signal length of the startup signal S2 refers to a transmission period during which the startup signal S2 is transmitted continuously. Therefore, when the second lock-end communications module 122 transmits the startup signal S2 while the second key-end communications module 222 is performing the intermittent reception operation, the second key-end communications module 222 is able to receive the startup signal S2 at least once.

The key-end control unit 21 monitors the received signal strength indication (RSSI) of the second key-end communications module 222. When finding the RSSI greater than a threshold value, the key-end control unit 21 determines that the second key-end communications module 222 should have received the startup signal S2. The threshold value to be compared with the RSSI may be set at the RSSI of the startup signal S2 when there is a predetermined distance (of 3 m, for example) between the electric lock controller 10 and the key device 20. Note that the RSSI tends to vary significantly due to reflection or interference of wireless signals. Therefore, even if the RSSI is equal to or greater than the threshold value, the distance between the electric lock controller 10 and the key device 20 is not always equal to or less than a predetermined distance.

In this embodiment, when determining that the second key-end communications module 222 has received the startup signal S2 from the second lock-end communications module 122 a number of times (e.g., six times) successively, the key-end control unit 21 makes the first key-end communications module 221 start the continuous reception operation. In other words, until the second key-end communications module 222 receives the startup signal S2 the number of times successively, the first key-end communications module 221 does not start the continuous reception operation but stays in the sleep mode. Note that the number of times of reception of the startup signal S2 does not have to be six times but may be any other number as well.

In addition, on determining that the second key-end communications module 222 should have received the startup signal S2, the key-end control unit 21 shortens the reception interval of the intermittent reception operation compared to the reception interval before the key-end control unit 21 has determined that the second key-end communications module 222 should have received the startup signal S2. Specifically, on determining that the second key-end communications module 222 should have received the startup signal S2, the key-end control unit 21 changes the reception interval of the intermittent reception operation from T21 into T22 (< T21). The reception interval T22 may be 1 ms, for example. However, this value is only an example and should not be construed as limiting. Rather the reception interval T22 may be any other value as long as the reception interval T22 is shorter than 250 ms that is the reception interval T21.

That is to say, the second key-end communications module 222 performs the intermittent reception operation at the reception interval T21 before receiving the startup signal S2, but starts performing the intermittent reception operation at the reception interval T22 that is shorter than the reception interval T21, once the second key-end communications module 222 has received the startup signal S2. Thus, on determining that the second key-end communications module 222 should have received the startup signal S2 once while performing the intermittent reception operation at the reception interval T21 and then five more times while performing the intermittent reception operation at the reception interval T22, the key-end control unit 21 makes the first key-end communications module 221 start the continuous reception operation. In this embodiment, the signal length T11 of the startup signal S2 is set at a value equal to or greater than 250 ms such that the second key-end communications module 222 is able to receive the startup signal S2 once at the reception interval T21 (of 250 ms) and five more times at the reception interval T22 (of 1 ms).

Meanwhile, after having had the second lock-end communications module 122 transmit the startup signal S2, the lock-end control unit 11 of the electric lock controller 10 makes the first lock-end communications module 121 transmit the beacon signal S1 at regular intervals (of 30 ms, for example). In this embodiment, when a predetermined amount of time passes since the second lock-end communications module 122 has transmitted the startup signal S2, the lock-end control unit 11 makes the first lock-end communications module 121 start transmitting the beacon signal S1. Alternatively, the lock-end control unit 11 may also make the first lock-end communications module 121 transmit the beacon signal S1 such that the beacon signal S1 is continuous with the startup signal S2 transmitted by the second lock-end communications module 122.

When finding that the first key-end communications module 221 has received the beacon signal S1 during the continuous reception operation, the key-end control unit 21 instructs that the continuous reception operation be suspended and instead makes the first key-end communications module 221 transmit the response signal S3. Unless the first key-end communications module 221 has received the beacon signal S1, the key-end control unit 21 instructs that the continuous reception operation be suspended when a predetermined amount of time (of 100 ms, for example) passes since the first key-end communications module 221 has started the continuous reception operation. That is to say, the first key-end communications module 221 performs the continuous reception operation continuously either until a predetermined amount of times passes since the start of the continuous reception operation or until the first key-end communications module 221 receives the beacon signal S1 for the first time since the start of the continuous reception operation.

When the first lock-end communications module 121 receives the response signal S3 from the first key-end communications module 221, authentication communication is carried out between the first lock-end communications module 121 and the first key-end communications module 221. During the authentication communication, key information is transmitted from the first key-end communications module 221 to the first lock-end communications module 121. Detailed description of the authentication communication is omitted herein.

### (4) Advantages

Next, advantages of the electric lock control system 1 according to this embodiment will be described.

In the electric lock control system 1 according to this embodiment, the key device 20 includes the first key-end communications module 221 that performs the continuous reception operation and the second key-end communications module 222 that performs the intermittent reception operation. The first key-end communications module 221 is configured to start the continuous reception operation of continuously waiting for the arrival of a beacon signal when the second key-end communications module 222 receives the startup signal from the electric lock controller 10 while performing the intermittent reception operation. This allows the first key-end communications module 221 to suspend the continuous reception operation (i.e., to be kept in the sleep mode) until the second key-end communications module 222 receives the startup signal. This cuts down the power consumption of the key device 20, because the intermittent reception operation consumes less power than the continuous reception operation.

In addition, in the electric lock control system 1 described above, the electric lock controller 10 is configured to transmit the startup signal before transmitting the beacon signal. In other words, the electric lock controller 10 is configured to transmit the beacon signal after having transmitted the startup signal. Thus, after the second key-end communications module 222 has received the startup signal to cause the first key-end communications module 221 to start the continuous reception operation in the key device 20, the beacon signal is transmitted from the electric lock controller 10. This allows the first key-end communications module 221 to receive the beacon signal more easily.

Furthermore, in the electric lock controller 10, the lock-end communications unit 12 includes two communications modules, namely, the first lock-end communications module 121 for transmitting the beacon signal and the second lock-end communications module 122 for transmitting the startup signal. This allows the beacon signal transmitted by the first lock-end communications module 121 and the startup signal transmitted by the second lock-end communications module 122 to be compliant with two different communications protocols. For example, adopting a communications protocol that reduces power consumption than using the beacon signal for the startup signal contributes to cutting down the power consumption of the electric lock controller 10. Alternatively, the electric lock controller 10 may also be configured to transmit both the startup signal and the beacon signal using a single communications module.

Furthermore, in the electric lock controller 10, the second lock-end communications module 122 transmits the startup signal such that the signal length of the startup signal is longer than the reception interval of the intermittent reception operation performed by the second key-end communications module 222. This allows the second key-end communications module 222 to receive the startup signal more easily while performing the intermittent reception operation.

In the key device 20, the first key-end communications module 221 is configured to perform the continuous reception operation continuously either until a predetermined amount of time passes since a start of the continuous reception operation or until the first key-end communications module 221 receives the beacon signal for the first time since the start of the continuous reception operation. This allows the first key-end communications module 221 to perform the continuous reception operation for a shorter time, thus cutting down the power consumption of the key device 20.

In addition, the key device 20 further includes the sensor unit 23 implemented as an acceleration sensor. The sensor unit 23 is configured to detect that the key device 20 is now moving. The second key-end communications module 222 is configured to start the intermittent reception operation when the sensor unit 23 detects that the key device 20 is now moving. Thus, when there is no need to perform the intermittent reception operation (e.g., when the user 6 does not carry the key device 20 with him or her), the second key-end communications module 222 of the key device 20 does not perform the intermittent reception operation. This further cuts down the power consumption of the key device 20.

Furthermore, the key device 20 is configured such that when the second key-end communications module 222 receives the startup signal a number of times successively, the first key-end communications module 221 starts the continuous reception operation. Therefore, the first key-end communications module 221 starts the continuous reception operation only when the wireless communication between the key device 20 and the electric lock controller 10 is stabilized. This allows the first key-end communications module 221 to receive the beacon signal more easily. In addition, this also reduces the chances of the first key-end communications module 221 starting the continuous reception operation even when the second key-end communications module 222 happens to receive a different type of wireless signal, not the startup signal. This cuts down the power consumption of the key device 20.

Furthermore, the second key-end communications module 222 is configured to, when receiving the startup signal while performing the intermittent reception operation, shorten the reception interval compared to the interval before the second key-end communications module 222 receives the startup signal. Therefore, this allows, in a situation where the wireless communication between the key device 20 and the electric lock controller 10 is stabilized, the first key-end communications module 221 to start the continuous reception operation earlier. This shortens the amount of time it takes to shut or open the electric lock 3 since the electric lock controller 10 and the key device 20 have started to communicate with each other.

### (5) Variations

Note that the exemplary embodiment described above is only one of various embodiments of the present disclosure and should not be construed as limiting. Rather, the exemplary embodiment may be readily modified in various manners depending on a design choice or any other factor without departing from a true spirit and scope of the present disclosure. Variations of the electric lock control system 1 according to the exemplary embodiment will be enumerated one after another. Note that any of the variations to be described below may be adopted in combination as appropriate.

### (5.1) First variation

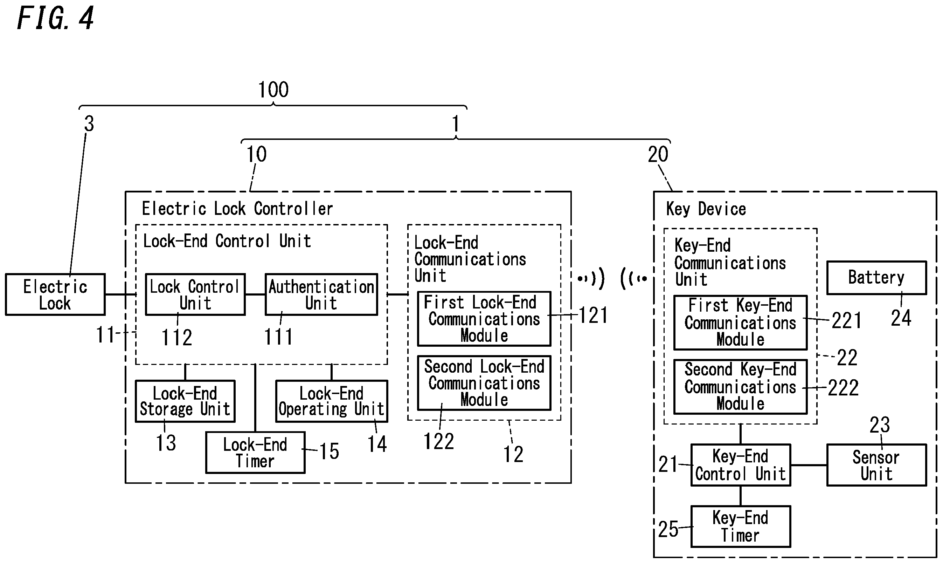

A first variation of the electric lock control system 1 according to the exemplary embodiment will be described with reference to FIG. 4. In the following description of the electric lock control system 1 according to the first variation, any constituent element of the first variation, having the same function as a counterpart of the exemplary embodiment described above, will be designated by the same reference numeral as that counterpart's, and description thereof will be omitted herein.

In the electric lock control system 1 according to this variation, the electric lock controller 10 further includes a lock-end timer 15, and the key device 20 further includes a key-end timer 25.

The lock-end timer 15 and the key-end timer 25 are each configured to measure time and retain timestamp information. The lock-end timer 15 and the key-end timer 25 are synchronized with each other such that their retained timestamp information (time information) matches up with each other when wireless communication is established between the lock-end communications unit 12 and the key-end communications unit 22. Specifically, the first lock-end communications module 121 transmits the timestamp information retained in the lock-end timer 15 to the first key-end communications module 221. In response, the key-end timer 25 adjusts the timestamp information retained in itself to the timestamp information that the first key-end communications module 221 has just received. This allows the lock-end timer 15 and the key-end timer 25 to have their retained timestamp information matched up with each other. In addition, even when a plurality of key devices 20 are provided, the timestamp information retained in the respective key-end timers 25 of the key devices 20 may also be adjusted to the timestamp information retained in the lock-end timer 15.

In this variation, when a press button switch of the lock-end operating unit 14 is pressed, the lock-end control unit 11 makes the second lock-end communications module 122 transmit the startup signal at a timing determined based on the measurement result (timestamp information) obtained by the lock-end timer 15. For example, when the press button switch of the lock-end operating unit 14 is pressed, the lock-end control unit 11 makes the second lock-end communications module 122 transmit the startup signal at a point in time when every digit after the decimal point goes zero according to the timestamp information retained in the lock-end timer 15.

In addition, the key-end control unit 21 makes the second key-end communications module 222 perform the intermittent reception operation at a timing determined based on the measurement result (timestamp information) obtained by the key-end timer 25. For example, the key-end control unit 21 makes the second key-end communications module 222 perform the intermittent reception operation such that the second key-end communications module 222 waits for the arrival of the signal at a point in time when every digit after the decimal point goes zero according to the timestamp information retained in the key-end timer 25.

That is to say, the electric lock control system 1 according to this variation synchronizes the lock-end timer 15 and the key-end timer 25 with each other such that their retained timestamp information matches up with each other. In addition, the electric lock control system 1 according to this variation also adjusts the timing when the second lock-end communications module 122 transmits the startup signal to the timing when the second key-end communications module 222 waits for the arrival of the signal while performing the intermittent reception operation. This allows the second key-end communications module 222 to receive the startup signal from the second lock-end communications module 122 more easily while performing the intermittent reception operation.

In this case, the time measured by the lock-end timer could be slightly different from the time measured by the key-end timer 25 depending on the precision of their respective crystal oscillators. Therefore, as time elapses since the lock-end timer 15 and the key-end timer 25 have been synchronized with each other, the time lag could increase between the timestamp information retained in the lock-end timer 15 and the timestamp information retained in the key-end timer 25.

Thus, the lock-end control unit 11 adjusts the signal length of the startup signal transmitted by the second lock-end communications module 122 according to the amount of time that has passed since the lock-end timer 15 and the key-end timer 25 have been synchronized with each other via wireless communication established between the first lock-end communications module 121 and the first key-end communications module 221. Specifically, the lock-end control unit 11 sets the signal length Wa of the startup signal transmitted by the second lock-end communications module 122 at the product of a coefficient Ka, the time elapsed Ta, and measuring precision Xa (i.e., Wa = Ka × Ta × Xa), where the coefficient Ka is a predetermined constant, the time elapsed Ta is the amount of time that has passed since the lock-end timer 15 and the key-end timer 25 have been synchronized with each other, and the measuring precision Xa indicates the precision (%) of the time measured by the lock-end timer 15. An upper limit value is set for the signal length Wa of the startup signal. The signal length Wa is adjusted within a range equal to or less than the upper limit value.

That is to say, the lock-end control unit 11 increases the signal length Wa of the startup signal as the amount of time that has passed (i.e., the time elapsed Ta) extends since wireless communication was established last time between the first lock-end communications module 121 and the first key-end communications module 221. This allows, even when the extension of the time elapsed Ta increases the time lag between the timestamp information retained by the lock-end timer 15 and the timestamp information retained by the key-end timer 25, the second key-end communications module 222 to receive the startup signal more easily.

Note that when a plurality of key devices 20 are provided, the lock-end control unit 11 calculates the signal length Wa of the startup signal by the equation described above using the longest one of the respective times elapsed Ta of the plurality of key devices 20. That is to say, the signal length Wa of the startup signal is calculated by the equation described above with respect to the key device 20, of which the time elapsed Ta since wireless communication with the electric lock controller 10 was established last time is longer than any other key device 20. This allows the second key-end communications module 222 to receive the startup signal more easily even in the key device 20 with the longest time elapsed Ta.

In addition, the key-end control unit 21 adjusts the reception interval of the intermittent reception operation performed by the second key-end communications module 222 according to the time elapsed since the lock-end timer 15 and the key-end timer 25 have been synchronized with each other via wireless communication established between the first lock-end communications module 121 and the first key-end communications module 221. Specifically, the key-end control unit 21 sets the reception interval Wb of the intermittent reception operation performed by the second key-end communications module 222 at a value obtained by dividing a coefficient Kb by the quotient of the time elapsed Tb divided by measuring precision Xb (i.e., Wb = Kb/Tb/Xb), where the coefficient Kb is a predetermined constant, the time elapsed Tb is the amount of time that has passed since the lock-end timer 15 and the key-end timer 25 have been synchronized with each other, and the measuring precision Xb indicates the precision (%) of the time measured by the key-end timer 25. A lower limit value is set for the reception interval Wb of the intermittent reception operation. The reception interval Wb is adjusted within a range equal to or greater than the lower limit value.

That is to say, the key-end control unit 21 shortens the reception interval Wb of the intermittent reception operation performed by the second key-end communications module 222 as the amount of time that has passed (i.e., the time elapsed Tb) extends since wireless communication was established last time between the first lock-end communications module 121 and the first key-end communications module 221. This allows, even when extension of the time elapsed Tb increases the time lag between the timestamp information retained by the lock-end timer 15 and the timestamp information retained by the key-end timer 25, the second key-end communications module 222 to receive the startup signal more easily.

### (5.2) Other variations

Next, other variations of the electric lock control system 1 according to this embodiment will be enumerated one after another.

In the example described above, the sensor unit 23 is implemented as an acceleration sensor. However, this is only an example and should not be construed as limiting. Alternatively, the sensor unit 23 may also be implemented as a global positioning system (GPS), for example. In that case, acquiring location information allows the sensor unit 23 to detect, as a predetermined state, that the key device 20 is currently located within a predetermined range with respect to the electric lock controller 10. Thus, when finding, based on the result of detection by the sensor unit 23, that the key device 20 is located within a predetermined range with respect to the electric lock controller 10, the key-end control unit 21 is able to make the second key-end communications module 222 perform the intermittent reception operation. This cuts down the power consumption of the key device 20.

Still alternatively, the sensor unit 23 may be implemented as a magnetic sensor. In that case, the electric lock controller 10 includes a magnetic field generator for generating a magnetic field within a predetermined range. In that case, detecting the magnetic field generated by the magnetic field generator allows the sensor unit 23 to detect, as a predetermined state, that the key device 20 is currently located within a predetermined range with respect to the electric lock controller 10.

Also, in the example described above, when the sensor unit 23 detects a predetermined state, the key-end control unit 21 makes the second key-end communications module 222 start the intermittent reception operation. However, this is only an example and should not be construed as limiting. Alternatively, when the sensor unit 23 detects the predetermined state, the key-end control unit 21 may shorten the reception interval of the intermittent reception operation to be performed by the second key-end communications module 222. Therefore, in a situation where the key device 20 is located distant from the electric lock controller 10, for example, this makes the reception interval of the intermittent reception operation longer, thus cutting down the power consumption of the key device 20. Meanwhile, in a situation where the key device 20 is located close to the electric lock controller 10, this shortens the reception interval of the intermittent reception operation, thus allowing the key device 20 to receive the startup signal more easily.

Optionally, in the electric lock controller 10, the lock-end control unit 11 may be configured to select, according to the surrounding radio wave environment, a channel with less significant radio wave interference from a plurality of channels. On the channel selected, the lock-end control unit 11 makes the second lock-end communications module 122 transmit the startup signal and makes the first lock-end communications module 121 transmit the beacon signal. That is to say, the lock-end control unit 11 has the startup signal and beacon signal transmitted over the same channel, i.e., on the same frequency band. In that case, in the key device 20, the second key-end communications module 222 performs the operation of waiting for the arrival of signals from the multiple channels while performing the intermittent reception operation. Specifically, when waiting for the arrival of respective signals during the intermittent reception operation, the second key-end communications module 222 waits for arrival of signals falling within respective frequency bands corresponding to the multiple channels. Then, before allowing the first key-end communications module 221 to start the continuous reception operation, the key-end control unit 21 makes the first key-end communications module 221 wait for arrival of signals on the channel of the startup signal received by the second key-end communications module 222 during the intermittent reception operation. This allows the startup signal and the beacon signal to be transmitted and received between the electric lock controller 10 and the key device 20 using a channel with less significant radio wave interference.

Optionally, the channel of the startup signal and the beacon signal may be determined in advance. In the electric lock controller 10, the lock-end control unit 11 selects, according to the surrounding radio wave environment, a channel with less significant radio wave interference from a plurality of channels. Then, when the key device 20 is registered with the electric lock controller 10, information about the channel selected by the lock-end control unit 11 is transmitted from the electric lock controller 10 to the key device 20. In the key device 20, on the channel selected by the lock-end control unit 11, the first key-end communications module 221 performs the continuous reception operation and the second key-end communications module 222 performs the intermittent reception operation. This allows the startup signal and the beacon signal to be transmitted and received between the electric lock controller 10 and the key device 20 over a channel with less significant radio wave interference.

Furthermore, in the electric lock controller 10, the lock-end control unit 11 may be configured to transmit the startup signal and the beacon signal at regular intervals (e.g., at intervals of 3 minutes), no matter whether any command has been entered through the lock-end operating unit 14 or not. The lock-end control unit 11 has the startup signal and the beacon signal transmitted at regular intervals and determines, depending on arrival or non-arrival of any response signal to the beacon signal, whether or not the key device 20 is left within the communications range. For example, when finding that the first lock-end communications module 121 has successively received, a number of times, a response signal to the beacon signal transmitted at regular intervals, the lock-end control unit 11 determines that the key device 20 should be left within the communication range. When determining that the key device 20 should be left within the communication range, the lock-end control unit 11 does not control the electric lock 3, and the locked or unlocked state of the opening/closing member 5 does not change, even when a command is entered through the lock-end operating unit 14.

Also, in the example described above, the plurality of constituent elements of the electric lock controller 10 are integrated together in a single housing. However, this is only an example and should not be construed as limiting. Alternatively, those constituent elements of the electric lock controller 10 may be distributed in multiple different housings. Furthermore, in the example described above, the lock-end control unit 11 is implemented as a single circuit. However, this is only an example and should not be construed as limiting. Alternatively, the lock-end control unit 11 may also be implemented as two or more circuits. For example, the functions of the lock-end control unit 11 may be distributed in two or more circuits. Still alternatively, at least some functions of the lock-end control unit 11 may be implemented as a cloud computing system as well.

In the example described above, the key device 20 is implemented as a tag device which may be contained in, or attached to, a bag or any other personal belonging carried by the user 6 with him or her. However, this is only an example and should not be construed as limiting. Alternatively, the key device 20 may also be a smartphone, a tablet computer, or any other mobile telecommunications device.

Furthermore, in the embodiment described above, the key device 20 is able to perform both the operation of unlocking the opening/closing member 5 and the operation of locking the opening/closing member 5. However, this is only an example and should not be construed as limiting. Alternatively, the key device 20 may also be configured to perform either the operation of unlocking the opening/closing member 5 or the operation of locking the opening/closing member 5.

Furthermore, in the embodiment described above, the opening/closing member 5 is implemented as a door (which may be a sliding door or a hinged door) or window that separates the inside 41 and outside 42 of the building 4 from each other. However, this is only an example and should not be construed as limiting. Alternatively, the opening/closing member 5 may also be a door that separates the inside and outside of some unit of the building 4. For example, when the building 4 is implemented as a multi-family dwelling house with a plurality of dwelling units, a multi-tenant building with a plurality of tenant stores, or an office building with a plurality of offices, the opening/closing member 5 may be the door that separates the inside and outside of each unit (which may be a dwelling unit, a tenant store, or an office).

In the embodiment described above, the electric lock system 100 is applied to a single-family dwelling house. However, this is only an example and should not be construed as limiting. Alternatively, the electric lock system 100 is also applicable to each dwelling unit of a multi-family dwelling house, for example. Still alternatively, the electric lock system 100 is also applicable to the main entrance door of a common area of a multi-family dwelling house or to a non-dwelling building 4 such as an office, a store, or a factory.

The agent that performs the functions of the electric lock control system 1 according to the present disclosure includes a computer system. In that case, the computer system may include, as principal hardware components, a processor and a memory. The functions of the electric lock control system 1 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be either integrated together on a single chip or distributed on multiple chips, whichever is appropriate. Those multiple chips may be integrated together in a single device or distributed in multiple devices without limitation.

### (6) Resume

An electric lock control system (1) according to a first aspect includes a key device (20) and an electric lock controller (10). The key device (20) includes a key-end communications unit (22) to establish wireless communication. The electric lock controller (10) includes a lock-end communications unit (12) that communicates wirelessly with the key-end communications unit (22), and controls an electric lock (3) that locks or unlocks an opening/closing member (5) at a building's (4) opening (40). The key-end communications unit (22) includes a first key-end communications module (221) and a second key-end communications module (222). The first key-end communications module (221) performs continuous reception operation of continuously waiting for arrival of a first signal (beacon signal) from the lock-end communications unit (12). The second key-end communications module (222) performs intermittent reception operation of intermittently waiting for arrival of a second signal (startup signal) from the lock-end communications unit (12). The first key-end communications module (221) starts the continuous reception operation when the second key-end communications module (222) receives the second signal (startup signal).

This aspect allows the first key-end communications module (221) to suspend the continuous reception operation (i.e., to be kept in a sleep mode) until the second key-end communications module (222) receives the second signal (startup signal). That is to say, this shortens the amount of time for which the first key-end communications module (221) performs the continuous reception operation. This cuts down the power consumption of the key device (20), because the intermittent reception operation consumes less power than the continuous reception operation.

In an electric lock control system (1) according to a second aspect, which may be implemented in conjunction with the first aspect, the lock-end communications unit (12) transmits the second signal (startup signal) before transmitting the first signal (beacon signal).

According to this aspect, it is not until the second key-end communications module (222) has received the startup signal to cause the first key-end communications module (221) to start the continuous reception operation in the key device (20) that the first signal (beacon signal) is transmitted from the electric lock controller (10). This allows the first key-end communications module (221) to receive the first signal (beacon signal) more easily.

In an electric lock control system (1) according to a third aspect, which may be implemented in conjunction with the first or second aspect, the lock-end communications unit (12) includes: a first lock-end communications module (121) and a second lock-end communications module (122). The first lock-end communications module (121) transmits the first signal (beacon signal). The second lock-end communications module (122) transmits the second signal (startup signal).

This aspect allows the first signal (beacon signal) and the second signal (startup signal) to be compliant with two different communications protocols.

In an electric lock control system (1) according to a fourth aspect, which may be implemented in conjunction with any one of the first to third aspects, a signal length of the second signal (startup signal) is longer than a reception interval of the intermittent reception operation performed by the second key-end communications module (222).

This aspect allows the second key-end communications module (222) to receive the second signal (startup signal) more easily while performing the intermittent reception operation.

In an electric lock control system (1) according to a fifth aspect, which may be implemented in conjunction with any one of the first to fourth aspects, the key device (20) further includes a key-end timer (25) that measures time. The electric lock controller (10) further includes a lock-end timer (15) that measures time. The key-end timer (25) and the lock-end timer (15) are synchronized with each other when wireless communication is established between the key-end communications unit (22) and the lock-end communications unit (12). The second key-end communications module (222) performs the intermittent reception operation at a timing determined by a result of measurement by the key-end timer (25). The lock-end communications unit (12) transmits the second signal (startup signal) at a timing determined by a result of measurement by the lock-end timer (15).

This aspect synchronizes the second lock-end communications module's (122) transmission of the second signal (startup signal) with the second key-end communications module's (222) start of waiting for arrival of the second signal during the intermittent reception operation. This allows the second key-end communications module (222) to receive the second signal (startup signal) from the second lock-end communications module (122) more easily during the intermittent reception operation.

In an electric lock control system (1) according to a sixth aspect, which may be implemented in conjunction with the fifth aspect, the lock-end communications unit (12) transmits the second signal (startup signal), of which the signal length is determined by an amount of time that has passed since the key-end timer (25) and the lock-end timer (15) have been synchronized with each other and by measuring precision of the lock-end timer (15).

This aspect allows, even when there is a significantly increased time lag between the time information provided by the lock-end timer (15) and the time information provided by the key-end timer (25), the second key-end communications module (222) to receive the second signal (startup signal) more easily.

In an electric lock control system (1) according to a seventh aspect, which may be implemented in conjunction with the fifth or sixth aspect, the second key-end communications module (222) performs the intermittent reception operation at a reception interval determined by an amount of time that has passed since the key-end timer (25) and the lock-end timer (15) have been synchronized with each other and by measuring precision of the key-end timer (25).

This aspect allows, even when there is a significantly increased time lag between the time information provided by the lock-end timer (15) and the time information provided by the key-end timer (25), the second key-end communications module (222) to receive the second signal (startup signal) more easily.

In an electric lock control system (1) according to an eighth aspect, which may be implemented in conjunction with any one of the first to seventh aspects, the key device (20) includes a sensor unit (23) to detect a predetermined state. When the sensor unit (23) detects the predetermined state, the second key-end communications module (222) starts the intermittent reception operation.

This aspect allows the second key-end communications module (222) to perform the intermittent reception operation for a shorter time, thus cutting down the power consumption of the key device (20).

In an electric lock control system (1) according to a ninth aspect, which may be implemented in conjunction with any one of the first to seventh aspects, the key device (20) includes a sensor unit (23) to detect a predetermined state. When the sensor unit (23) detects the predetermined state, the second key-end communications module (222) makes a reception interval of the intermittent reception operation shorter than an interval before the sensor unit (23) detects the predetermined state.

This aspect allows the second key-end communications module (222) to adjust its reception interval for its intermittent reception operation. This cuts down the power consumption of the key device (20) and facilitates the second key-end communications module's (222) reception of the second signal (startup signal).

In an electric lock control system (1) according to a tenth aspect, which may be implemented in conjunction with any one of the first to ninth aspects, when the second key-end communications module (222) successively receives the second signal (startup signal) a number of times while performing the intermittent reception operation, the first key-end communications module (221) starts the continuous reception operation.

This aspect allows the first key-end communications module (221) to start the continuous reception operation while the wireless communication between the lock-end communications unit (12) and the key-end communications unit (22) is stabilized. This allows the first key-end communications module (221) to receive the first signal (beacon signal) more easily. In addition, this also reduces the chances of the first key-end communications module (221) starting the continuous reception operation even when the second key-end communications module (222) happens to receive a different type of wireless signal, instead of the second signal (startup signal). This cuts down the power consumption of the key device (20).

In an electric lock control system (1) according to an eleventh aspect, which may be implemented in conjunction with the tenth aspect, the second key-end communications module (222) shortens the reception interval, when receiving the second signal (startup signal) while performing the intermittent reception operation,.

This aspect shortens the time delay between the second key-end communications module's (222) reception of the second signal (startup signal) and the first key-end communications module's (221) start of the continuous reception operation.

In an electric lock control system (1) according to a twelfth aspect, which may be implemented in conjunction with any one of the first to eleventh aspects, the first key-end communications module (221) performs the continuous reception operation continuously either until a predetermined amount of time passes since a start of the continuous reception operation or until the first key-end communications module (221) receives the first signal (beacon signal) since the start of the continuous reception operation.

This aspect allows the first key-end communications module (221) to perform the continuous reception operation for a shorter time, thus cutting down the power consumption of the key device (20).

A key device (20) according to a thirteenth aspect may be used as the key device (20) of the electric lock control system (1) according to any one of the first to twelfth aspects.

This aspect allows the first key-end communications module (221) of the key device (20) to perform the continuous reception operation for a shorter time, thus cutting down the power consumption of the key device (20).

An electric lock controller (10) according to a fourteenth aspect may be used as electric lock controller (10) of the electric lock control system (1) according to any one of the first to twelfth aspects.

This aspect allows the first key-end communications module (221) of the key device (20) to perform the continuous reception operation for a shorter time, thus cutting down the power consumption of the key device (20).

An electric lock system (100) according to a fifteenth aspect includes: the electric lock control system (1) according to any one of the first to twelfth aspects; and an electric lock (3) to be controlled by the electric lock controller (10).

This aspect allows the first key-end communications module (221) of the key device (20) to perform the continuous reception operation for a shorter time, thus cutting down the power consumption of the key device (20).

Note that the constituent elements according to the second to twelfth aspects are not essential elements for the electric lock control system (1) but may be omitted as appropriate.

### Reference Signs List

- 1: Electric Lock Control System
- 10: Electric Lock Controller
- 12: Lock-End Communications Unit
- 121: First Lock-End Communications Module
- 122: Second Lock-End Communications Module
- 15: Lock-End Timer
- 20: Key Device
- 22: Key-End Communications Unit
- 221: First Key-End Communications Module
- 222: Second Key-End Communications Module
- 23: Sensor Unit
- 25: Key-End Timer
- 3: Electric Lock
- 4: Building
- 40: Opening
- 5: Opening/Closing Member
- 100: Electric Lock System

## Claims

1. An electric lock control system comprising:
a key device including a key-end communications unit configured to establish wireless communication; and
an electric lock controller including a lock-end communications unit and configured to control an electric lock, the lock-end communications unit being configured to communicate wirelessly with the key-end communications unit, the electric lock being configured to lock or unlock an opening/closing member installed at a building's opening,
the key-end communications unit including:
a first key-end communications module configured to perform continuous reception operation of continuously waiting for arrival of a first signal from the lock-end communications unit; and
a second key-end communications module configured to perform intermittent reception operation of intermittently waiting for arrival of a second signal from the lock-end communications unit,
the first key-end communications module being configured to start the continuous reception operation when the second key-end communications module receives the second signal.

2. The electric lock control system of claim 1, wherein
the lock-end communications unit is configured to transmit the second signal before transmitting the first signal.

3. The electric lock control system of claim 1 or 2, wherein
the lock-end communications unit includes: a first lock-end communications module configured to transmit the first signal; and a second lock-end communications module configured to transmit the second signal.

4. The electric lock control system of any one of claims 1 to 3, wherein
a signal length of the second signal is longer than a reception interval of the intermittent reception operation performed by the second key-end communications module.

5. The electric lock control system of any one of claims 1 to 4, wherein
the key device further includes a key-end timer configured to measure time,
the electric lock controller further includes a lock-end timer configured to measure time,
the key-end timer and the lock-end timer are configured to be synchronized with each other when wireless communication is established between the key-end communications unit and the lock-end communications unit,
the second key-end communications module is configured to perform the intermittent reception operation at a timing determined by a result of measurement by the key-end timer, and
the lock-end communications unit is configured to transmit the second signal at a timing determined by a result of measurement by the lock-end timer.

6. The electric lock control system of claim 5, wherein
the lock-end communications unit is configured to transmit the second signal, of which the signal length is determined by an amount of time that has passed since the key-end timer and the lock-end timer have been synchronized with each other and by measuring precision of the lock-end timer.

7. The electric lock control system of claim 5 or 6, wherein
the second key-end communications module is configured to perform the intermittent reception operation at a reception interval determined by an amount of time that has passed since the key-end timer and the lock-end timer have been synchronized with each other and by measuring precision of the key-end timer.

8. The electric lock control system of any one of claims 1 to 7, wherein
the key device includes a sensor unit configured to detect a predetermined state, and
the second key-end communications module is configured to, when the sensor unit detects the predetermined state, start the intermittent reception operation.

9. The electric lock control system of any one of claims 1 to 7, wherein
the key device includes a sensor unit configured to detect a predetermined state, and
the second key-end communications module is configured to, when the sensor unit detects the predetermined state, make a reception interval of the intermittent reception operation shorter than an interval before the sensor unit detects the predetermined state.

10. The electric lock control system of any one of claims 1 to 9, wherein
the first key-end communications module is configured to, when the second key-end communications module successively receives the second signal a number of times while performing the intermittent reception operation, start the continuous reception operation.

11. The electric lock control system of claim 10, wherein
the second key-end communications module is configured to, when receiving the second signal while performing the intermittent reception operation, shorten the reception interval.

12. The electric lock control system of any one of claims 1 to 11, wherein
the first key-end communications module is configured to perform the continuous reception operation continuously either until a predetermined amount of time passes since a start of the continuous reception operation or until the first key-end communications module receives the first signal since the start of the continuous reception operation.

13. A key device for use as the key device of the electric lock control system of any one of claims 1 to 12.

14. An electric lock controller for use as the electric lock controller of the electric lock control system of any one of claims 1 to 12.

15. An electric lock system comprising:
the electric lock control system of any one of claims 1 to 12; and
an electric lock configured to be controlled by the electric lock controller.
